# EUROPÄISCHE PATENTSCHRIFT

(11) **EP 1 732 746 B1**
(45) Veröffentlichungstag und Bekanntmachung des Hinweises auf die Patenterteilung: **27.04.2011**
(21) Anmeldenummer: 05737704.6
(22) Anmeldetag: 04.05.2005
(51) Int. Cl.: B29C 67/00

(54) **VERFAHREN ZUR HERSTELLUNG EINES DREIDIMENSIONALEN OBJEKTS MIT VERBESSERTER TRENNUNG AUSGEHÄRTETER MATERIALSCHICHTEN VON EINER BAUEBENE**
PROCESS FOR PRODUCING A THREEDIMENSIONAL OBJECT WITH IMPROVED SEPARATION OF HARDENED MATERIAL LAYERS FROM A BASE PLANE
PROCEDE DE FABRICATION D'UN OBJET TRIDIMENSIONNEL AVEC UNE MEILLEURE SEPARATION DE COUCHES DE MATERIAU DURCIES D'UN PLAN DE CONSTRUCTION

(30) Priorität: 07.05.2004 DE 102004022606; 07.05.2004 US 569001 P
(43) Veröffentlichungstag der Anmeldung: 20.12.2006
(73) Patentinhaber: Envisiontec GmbH, 45968 Gladbeck (DE)
(72) Erfinder: SHKOLNIK, Alexandr, Los Angeles, CA 90046 (US); JOHN, Hendrik, 46569 Hünxe (DE); EL-SIBLANI, Ali, Dearborn Heights, MI 48127 (US)
(74) Vertreter: Oser, Andreas
(86) Internationale Anmeldenummer: PCT/EP2005/004889
(87) Internationale Veröffentlichungsnummer: WO 2005/110721

(56) Entgegenhaltungen:
- EP-A- 0 466 422

## Beschreibung

Die Erfindung betrifft ein Verfahren und eine Vorrichtung zur Herstellung eines dreidimensionalen Objekts durch schichtweises Verfestigen eines photopolymerisierbaren Kunststoffs, mit Hilfe einer planaren oder im wesentlichen planaren Bau-/Referenzebene, an der der in einem flüssigen Material enthaltene photopolymerisierbare Kunststoff schichtweise durch elektromagnetische Strahlung härten soll, wobei die Bau-/Referenzebene durch eine elastische Folie ausgebildet wird.

### Stand der Technik

Für den schichtweisen Aufbau dreidimensionaler Objekte aus photo- und insbesondere lichthärtenden Polymeren bzw. Kunststoffen werden in der Literatur unterschiedlichste Verfahren angegeben, siehe hierzu "Automated Fabrication - Improving Productivity in Manufacturing" von Marshall Burns, 1993 (ISBN 0-13-119462-3).

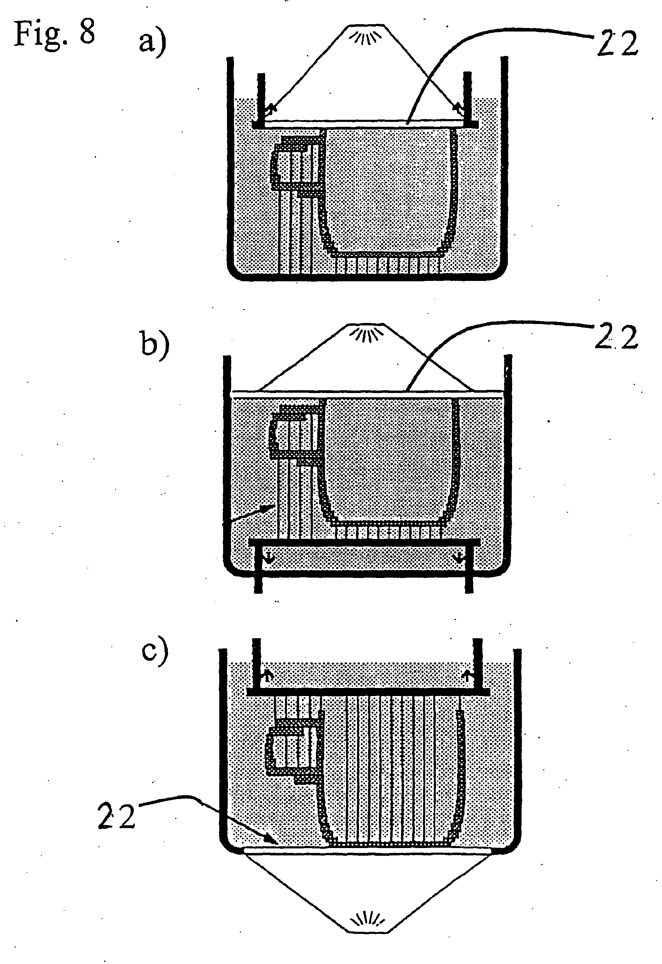

Unter die beschriebenen Verfahren fallen drei Varianten, bei denen die zu erzeugende Schicht durch eine transparente Referenzebene, einem sogenannten "Contact Window" 22 (KontaktFenster), hindurch selektiv belichtet wird und an dieser Ebene polymerisiert/aushärtet. Die drei Varianten sind in Fig. 8A-C skizziert.

Um die ausgehärtete Materialschicht von dem Kontaktfenster / der Referenzebene trennen zu können, wird in den Patentschriften US 5,171,490 (Efrem V. Fudim) und DE 41 25 534 A1 (EOS GmbH, Electro Optical Systems) eine Lösung für eine Trennschicht mit Hilfe einer dünnen Folie aus flexiblem Kunststoff beschrieben.

Die EP 0 484 086 A1 beschreibt die Anwendung einer Trennfolie in der Bau-/Referenzebene, die semipermeabel ausgebildet ist, um gegenüber einer deformierbaren Beschichtungsmischung in einer Richtung permeabel, jedoch gegenüber dem photopolymerisierbaren Kunststoff in der entgegengesetzten Richtung impermeabel zu sein. Durch den Durchtritt der deformierbaren Beschichtungsmischung sollen die Adhäsionskräfte der Folie gegenüber der ausgehärteten Schicht verringert werden. Die deformierbaren Beschichtungsmischung kann ein Gas, eine Flüssigkeit oder ein Gel, also ein Fluid sein. Die Folie ist in einem Rahmen eingespannt. Eine Rahmentranslationseinrichtung führt, nach dem Photohärten jeweils einer Schicht, eine Translationsbewegung des Rahmens mit der Folie aus. Aufgrund des Einspannens und des zusätzlichen Vorsehens der deformierbaren Beschichtungsmischung ist die Belastung auf die semipermeable Folie hoch.

In der EP 0 435 564 und, auf andere Weise, in der EP 0 466 422 A1, der die Merkmale der Oberbegriffe der Ansprüche 1, 4, 8 und 10 offenbart, wird zum Trennvorgang eine transparente Platte benötigt, wodurch eine Folie, welche oberhalb der Platte aufgehängt ist, unter Zugspannung gesetzt wird.

### Nachteile Stand der Technik

Bei der selektiven Belichtung durch Laser oder Maske in unterschiedlich geformten Flächenstrukturen direkt an einer, der Strahlungsquelle gegenüberliegenden Seite einer transparenten Referenzebene, polymerisiert das Harz in direktem Kontakt mit dieser Referenzebene aus. Die Problematik besteht darin, die in Ihrer Flächenstruktur unterschiedlich ausgebildete Schicht so von der transparenten Referenzebene zu trennen, dass sie an den vorher erzeugten Schichten haften bleibt und durch die Trennkraft sowohl die entstandene Schicht als auch der bereits erzeugte Teil des Objektes nicht verformt oder gar zerstört bzw. abgerissen wird und letztendlich das Schicht für Schicht entstehende Objekt über den gesamten Bauprozeß an der Trägerplatte haften bleibt.

Beim Einsatz einer Trennfolie wird der sogenannte Schäleffekt zunutze gemacht, dass heißt die Folie schält sich durch den Trennvorgang regelrecht von der ausgehärteten Polymerschicht ab, wodurch die Trennkräfte in Z-Richtung aufgrund einer Kräftevektorenzerlegung verringert werden.

Dient die Folie als Trennschicht zu einer transparenten Referenzebene, z.B. einer Glas- oder Kunststoffplatte, kann es beim partiellen Kontakt der Folie mit der Platte zur Ausbildung Newtonscher Ringe oder Blaseneinschlüssen kommen, die die optische Abbildung der Maske in der Bauebene negativ beeinflussen und verfälschen können.

In den meisten Fällen der oben aufgeführten Patente wird die Folie zum Zweck der Trennung der ausgehärteten Schicht und zum Zweck des erneuten Materialauftrags bewegt, abgezogen oder abgerollt. Dies beansprucht die Folie in erhöhtem Maße und reduziert somit die Standzeit. Außerdem werden zusätzliche mechanisch angetriebene Komponenten oder deformierbare Beschichtungsfluide eingesetzt, was fehleranfällig ist.

Wird die Folie ohne eine massive Referenzplatte als Anlagefläche eingesetzt, hängt die Folie in jedem Fall, auch trotz hoher Vorspannung, durch, wodurch keine planare Bauebene mehr gewährleistet ist. Dieser Effekt wird noch verstärkt, wenn eine deformierbares Beschichtungsfluid mit einer semipermeablen Folie kombiniert wird. Wird eine im wesentlichen planare Anordnung der Folie ohne Stütze durch eine massive Referenzplatte gewählt und zusätzlich z.B. mit Beschichtungsfluiden belastet, wird die Folie leicht überbeansprucht und die Standzeiten gehen weiter zurück, insbesondere wenn dünne Folien verwendet werden.

### Aufgabe der Erfindung

Aufgabe der Erfindung ist es, ein Verfahren bzw. eine Vorrichtung der eingangs genannten Art bereitzustellen, bei der der Trennvorgang der als Bau- bzw. Referenzebene dienenden Folie von der ausgehärteten Materialschicht verbessert ist. Vorteilhafter Weise soll eine Aushärtung ohne Einsatz einer massiven Referenzplatte ermöglicht werden, dass aber dennoch mit einer Folie eine planare oder annährend planare Bau-/Referenzebene bereitgestellt wird.

### Lösung der Aufgabe

Diese Aufgabe wird durch ein Verfahren mit den Merkmalen nach Anspruch 1 oder 4 bzw. durch eine Vorrichtung: mit den Merkmalen nach Anspruch 8, oder 10 gelöst. Bevorzugte Weiterbildungen des erfindungsgemäßen Verfahrens bzw. der erfindungsgemäßen Vorrichtung sind in den Unteransprüchen angegeben.

### Beschreibung der Erfindung und deren Vorteile

Durch die erfindungsgemäße Lösung und durch die bevorzugten Weiterbildungen werden die Nachteile des Stands der Technik eliminiert, und es können die nachfolgend beschriebenen Vorteile erzielt werden.
a) Es treten keine oder minimierte Störungen auf die optische Abbildung auf, d.h. die Anzahl der optischen Übergänge von einem ins andere Medium (mit unterschiedlichen Dichten) werden reduziert.
b) Die Trennkräfte auf die zuletzt ausgehärtete Schicht und somit das Modell werden minimiert.
c) Es muß keine zusätzliche Einrichtung oder kein zusätzliches Verfahren zum Auftragen einer neuen Materialschicht eingesetzt werden.
d) Das Trennverfahren ist nicht durch die Größe der ausgehärteten Fläche limitiert.
e) Es kann an einer planaren oder annähernd planaren Bau-/Referenzebene ohne den Einsatz einer massiven Referenzplatte ausgehärtet werden.
f) Der Einsatz der mechanisch angetriebenen Komponenten kann auf ein Minimum reduziert werden.

Die Trennschicht in Form einer Folie dient gleichzeitig als planare oder annähernd planare Referenz-/Bauebene. Als Material für die Trennschicht wird ein elastisches, transparentes/translucentes Material wie z.B. Silikon oder andere Kautschukarten verwendet. Vorzugsweise ist die Folie weder permeabel noch semipermeabel, und/oder wird die Folie nicht mit einem deformierbaren Beschichtungsfluid beschichtet. Die Folie wird in einem Rahmen gehalten und unterliegt einer einstellbaren, zur Befestigung der Folie notwendigen Vorspannung. Der Folienrahmen schwimmt quasi auf dem Photopolymer und ist somit in ständigem Kontakt mit dem Photopolymer. Auch während des Bauprozesses bleibt die Folienunterseite permanent im Kontakt mit dem das Photopolymer enthaltenden Material, unabhängig vom Zustand des das Photopolymer enthaltenden Materials. Auch und insbesondere während des Trennvorgangs bleibt der Kontakt bestehen, so dass während des Trennvorgangs frisches flüssiges Material von der Seite einströmen kann. Dadurch, dass die Folie im wesentlichen keiner oder nur einer geringen Vorspannung unterliegt, ist mit einer plastischen Verformung oder Kriechen des Folienmaterials nicht zu rechnen, was wiederum für eine hohe Standzeit der Folie spricht. Ein aus der im wesentlichen fehlenden oder nur geringen Vorspannung resultierendes Durchhängen der Folie wird durch den Druck im Flüssigkeitsbecken kompensiert. Die oben genannten Vorteile der Erfindung können besonders wirksam erreicht werden durch kombinierte Einstellung der Bedingungen bezüglich (i) Vorspannung der in den Rahmen eingespannten Folie und (ii) Höhenposition des Rahmens und damit der Folie in dem Flüssigkeitsbecken, insbesondere derart, daß die Folie im wesentlichen keiner oder nur einer geringen Vorspannung unterliegt und gleichzeitig der Druck im Flüssigkeitsbecken für eine Kompensation des Durchhängens der Folie sorgt, also ein Ausbilden eines negativen Meniskus verhindert, ohne daß eine weitere Folienstütze wie einer Platte notwendig ist. Es ist sogar von Vorteil, wenn die Bau-/Referenzebene allein durch die Folie, ohne Stütze durch eine gegebenenfalls transparente Glas- oder Kunststoffplatte, ausgestaltet ist.

Da erfindungsgemäß auf eine Referenzebene in Form einer zusätzlichen transparenten Glas- oder Kunststoffplatte verzichtet werden kann, können während des Bau-/Belichtungsprozesses optische Fehler durch Newtonsche Ringe oder eingeschlosse Luftblasen, die beim Kontakt zwischen Folie und Referenzebene entstehen würden, eliminiert werden.

Der Folienrahmen wird so in das Photopolymer-Becken positioniert und in der Höhe ausgerichtet oder abgesenkt, dass im Ruhezustand das "Durchhängen" der Folie (negativer Meniskus) durch den Druck des den photopolymerisierbaren Kunststoff enthaltenden flüssigen Materials gegenüber der Folie kompensiert wird. Der Druck dürfte hauptsächlich durch den Flüssigkeitsdruck oder hydrostatischen Druck gebildet sein.

Die Folie kann sich während des Trennvorgangs elastisch verformen, so daß ein sogenannter "Schäl"- oder "Abzieh"-vorgang an der ausgehärteten Schicht hervorgerufen wird. Durch die elastische Verformung der Trennschicht bzw. durch den Abziehvorgang findet eine Verlagerung/Vektorzerlegung des Trennkraftvektors statt, die den Trennvorgang wesentlich erleichtert.

Das Material der Folie kann je nach verwendetem Photopolymer für den Trennvorgang ausgewählt bzw. optimiert werden.

Ein zusätzlicher "Antihaff"-Effekt und die leichte Inhibierung der radikalen Polymerisation bei Acrylat-Systemen kann z.B. durch den Einsatz von FEP-, PTFE- oder PFA-Folien erreicht werden.

Die Folie kann bei Deschädigung oder Abnutzung unproblematisch ausgewechselt werden.

### Beschreibung der Zeichnungen und der bevorzugten Ausführungsformen der Erfindung

Die vorliegende Erfindung wird nachfolgend beispielhaft und nicht einschränkend anhand von Zeichnungen näher erläutert. In den Zeichnungen bedeuten:
Fig. 1 den schematischen Grundaufbau eines Verfahrens bzw. einer Vorrichtung (im Querschnitt) gemäß einer bevorzugten Ausführungsform der vorliegenden Erfindung;
Fig. 2 bis Fig. 6 schematisch verschiedene Schritte im Verlauf des Verfahrens zur Herstellung eines dreidimensionalen Objekts gemäß einer bevorzugten Ausführungsform der vorliegenden Erfindung;
Fig. 7 schematisch in perspektivischer Darstellung eine bevorzugte Art der Trennung der Folie von der zuletzt gehärteten Polymerschicht; und
Fig. 8 schematisch drei Varianten einer herkömmlichen Herstellung eines dreidimensionalen Objekts.
Fig. 9 bis 15 zeigen Ausführungsformen gemäß einem weiteren Aspekt der vorliegenden Erfindung, bei dem nach dem Härten einer vorangehenden Schicht die Bau-/Referenzebene wieder glatt gestrichen wird.

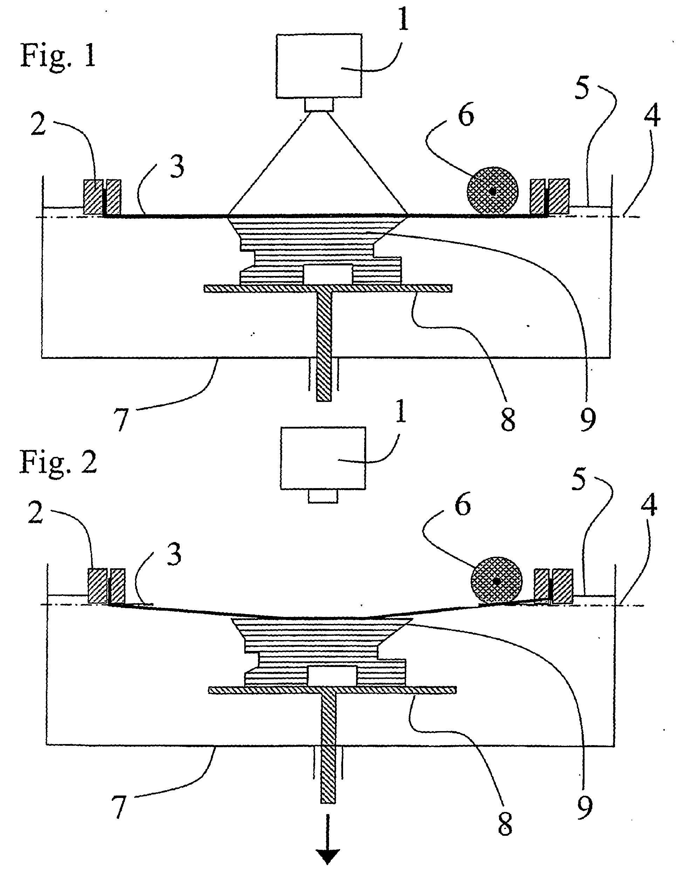

Die Anordnung in Fig. 1 zeigt schematisch im Querschnitt eine Ausführungsform der erfindungsgemäßen Vorrichtung für ein Rapid Prototyping Verfahren auf Basis der Photoverfestigung mittels Laser oder Maskenbelichtung mit Hilfe einer Projektionseinheit 1, wobei sich unterhalb der Projektionseinheit in einem Becken 7 das ein Photopolymer (photopolymerisierbarer Kunststoff) enthaltende, flüssige Material mit einem Oberflächenniveau 5 befindet. Das flüssige oder zumindest fließfähige Material kann durch ein flüssiges Photopolymer selbst, oder durch eine Mischung oder Lösung des Photopolymers mit einem Trägermaterial gebildet sein. In dem Becken und somit innerhalb des flüssigen Materials befindet sich eine Trägerplatte 8, die in vertikaler Richtung bewegt werden kann. Auf Höhe der Materialoberfläche ist ein Rahmen 2 angebracht, in den eine Folie 3 eingespannt ist. Die Folie 3 ist mit einer notwendigen Vorspannung in den Rahmen eingespannt und der Rahmen ist dabei von seiner Höhe her so positionierbar, bzw. in das Material absenkbar, dass der Druck des flüssigen Materials das "Durchhängen" der Folie kompensiert, sodass eine annähernd planare Bauebene entsteht. Dadurch kann bei der hier beschriebenen Vorrichtung auf eine transparente Referenzebene in Form einer transparenten Glas oder Kunststoffplatte zur Gewährleistung einer planaren Bauebene 4 (Anlagefläche für die Folie) verzichtet werden. Die Folie befindet sich somit permanent im Kontakt mit dem Photopolymer - unabhängig vom (je nachdem flüssigen, härtenden oder gehärteten) Zustand des Photopolymers.

Für die erste Schicht wird die Trägerplatte 8 so weit unter die Materialoberfläche gefahren, dass die Tiefenhärtung des selektiv belichteten Photopolymers durch die Belichtungseinheit eine feste Haftung der ersten Schicht an der Oberseite der Trägerplatte gewährleistet. Hierbei wird die Lichtenergie von oben direkt durch die Folie in das Photopolymer eingebracht. Die Belichtung kann selektiv über Laser oder durch Maskenbelichtung mittels einer Projektionseinheit, z.B. auf Basis von DLP^{®}/DMD^{®} erfolgen.

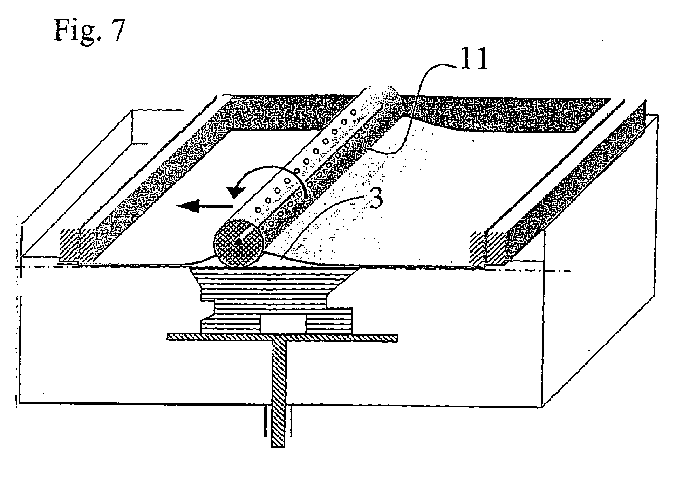

Nach dem Härten der Schicht, infolge Einstrahlung elektromagnetischer Strahlung durch die Folie hindurch, haftet die Schicht sowohl an der Trägerplatte als auch an der Unterseite der Folie. Wie in Fig. 2 anhand einer Trennung von bereits mehrere Schichten aufweisenden Objekts gezeigt bleibt beim Absenken der Trägerplatte die unterste ausgehärtete Schicht an der Trägerplatte haften. Durch einen Abschälprozess löst sich die Folie von der zuletzt ausgehärteten Schicht. Das vollständige Trennen der Folie von der ausgehärteten Schicht kann alternativ durch folgende Mittel bzw. Maßnahmen a) bis c) unterstützt werden:
a) Die Trägerplatte samt ausgehärteter Schicht kann über das Maß der nachfolgend auszuhärtenden Schicht hinaus von der Bauebene weg bewegt werden. Dabei wird die Position des Rahmens mit der Folie nicht verändert. Nach vollständiger Trennung der ausgehärteten Schicht von der Folie wird die Trägerplatte mit der ausgehärteten Schicht auf das Maß der folgenden auszuhärtenden Schicht (zwischen Bauebene 5 und zuletzt ausgehärteter Schicht 9) zurückbewegt.
b) Der Rahmen mit der Folie kann translatorisch und/oder rotatorisch in oder aus der Bauebene von der ausgehärteten Schicht weg bewegt und, nachdem die Trägerplatte mit der ausgehärteten Schicht um das Maß der nächsten, auszuhärtenden Schicht von der Bauebene weg bewegt wurde, wieder in die Ursprungsposition gebracht werden.
c) Ein Unterdruck erzeugendes Element, das zum Beispiel in Form eines Schiebers, eines Streifers oder einer Rolle ausgestaltet ist, und das an der zur Folie hin gerichteten Unterseite mindestens eine Ansaugöffnung versehen ist, wird mit der Oberseite der Folie in Kontakt gebracht. Dies kann zum Beispiel durch eine in Fig. 7 schematisch dargestellte "Vakuum-Rolle" ausgeführt werden, die mit Ansaugöffnungen über ihren Umfang versehen ist und über eine Leitung mit einer Ansaugeinrichtung zur Erzeugung eines Unterdrucks verbunden ist. Die Rolle wird über die Oberseite der Folie gerollt, wobei ein Unterdruck an die Ansaugöffnungen angelegt ist und die Folie dadurch entlang der Rolle angehoben bzw. von der ausgehärteten Materialschicht abgezogen wird. Dieses Verfahren hat den Vorteil, dass die Trägerplatte mit den bereits generierten Schichten nur um das Maß der nächsten Schichtdicke nach unten bewegt werden muss. Anstatt einer Rolle kann zum Glattstreichen der Folie für das Entfernen der konvexen Wölbung der Folie (positiver Meniskus) auch ein Streifer, ein Schieber oder eine Platte verwendet werden. Die jeweilige Einrichtung zum Glätten kann zum Vorgang des Glättens von einer Position außerhalb des bestrahlten Arbeitsbereichs passend zum Zeitpunkt des Glättens in den bestrahlten Arbeitsbereich eingebracht werden. Alternativ kann die jeweilige Einrichtung sich die ganze Zeit innerhalb des bestrahlten Arbeitsbereichs befinden und beim Schritt des Glättens mit der Folie kontaktiert werden, wobei in diesem Fall die Einrichtung zum Glätten transparent ausgeführt sein sollte.

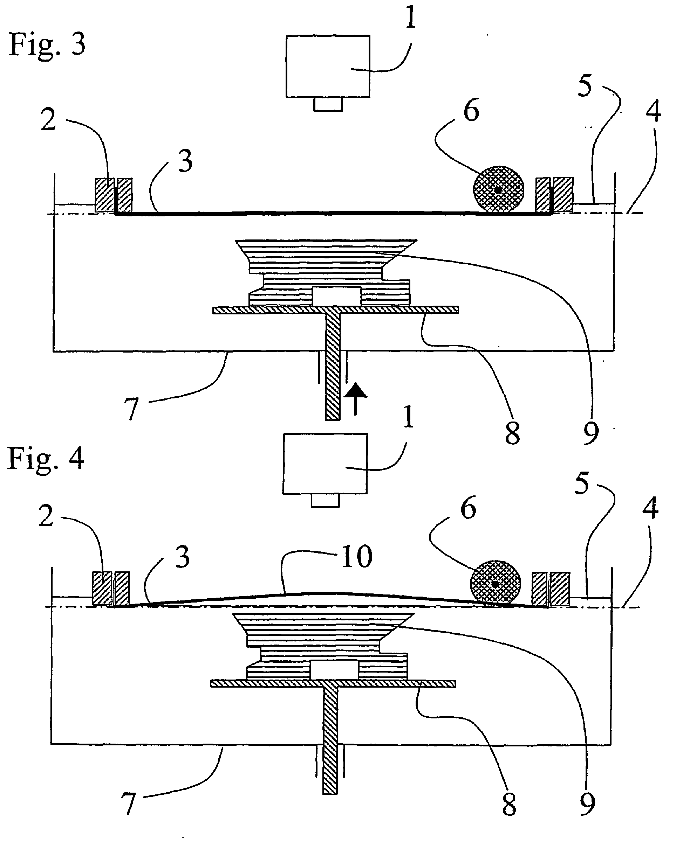

Da seitlich des gehärteten Materials weiter Kontakt der Folie mit dem das Photopolymer enthaltenden flüssigen Material besteht, fließt durch den Trennungsprozess von Folie und ausgehärteter Schicht automatisch frisches flüssiges Material in den Zwischenraum zwischen zuletzt ausgehärteter Schicht und Folie nach (s. Fig. 3).

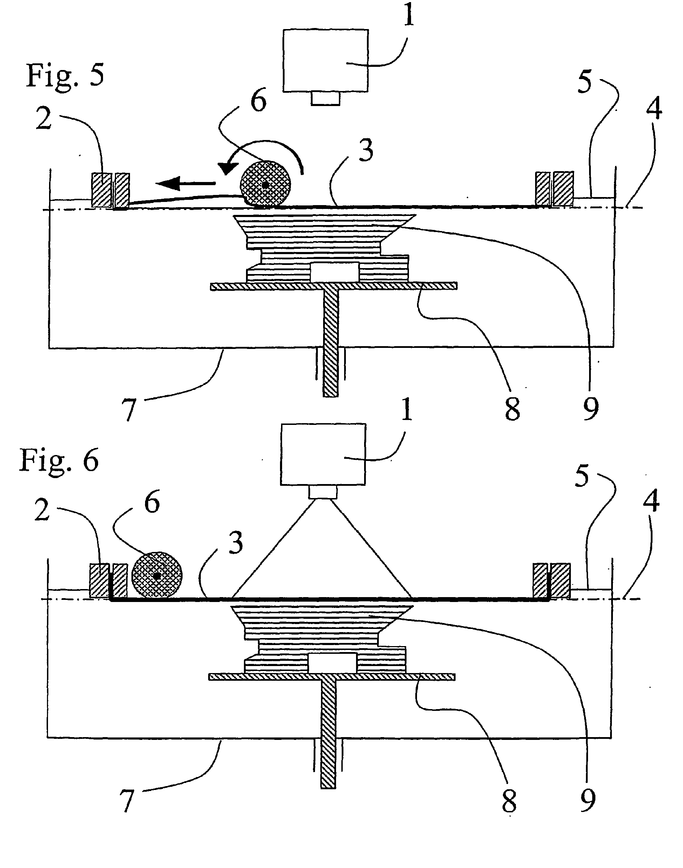

Durch die oben beschriebenen Trennvorgänge und das Repositionieren der unterschiedlichen Komponenten wie Bauplattform, Folienrahmen oder Folie für den folgenden Aushärtungsprozess der nächsten Schicht kann sich die Folie wie in Fig. 4 gezeigt durch das eingeschlossene Photopolymer nach oben wölben (konvex). Um diesen so entstandenen positiven Miniskus zu eliminieren und wieder eine annähernd planare Bauebene sicherzustellen, wird mit einer Rolle, die entlang der Oberseite der Folie bewegt wird, das überschüssige Material aus dem Spalt zwischen zuletzt ausgehärteter Schicht und Folie verdrängt (s. Fig. 5). Wird in der Vorrichtung eine wie in Fig. 7 gezeigte "Vakuum-Rolle" eingesetzt, die zuvor die Trennung von Folie und gehärteter Schicht unterstützte, so kann bei diesem Schritt der Verdrängung überschüssigen Materials gemäß Fig. 5 der Unterdruck ausgeschaltet sein.

Nachdem sich nun automatisch nach der beschriebenen Trennung der Materialauftrag durch Einstellung eines passenden Spalts zwischen Folie und zuletzt gehärteter Schicht ergibt, wird danach die nächste Schicht ausgehärtet und der in der Folge davon Trennungsprozess wiederholt (s. Fig. 6). Der gesamte Prozess wird solange wiederholt, bis das dreidimensionale Objekt gänzlich schichtweise aufgebaut worden ist.

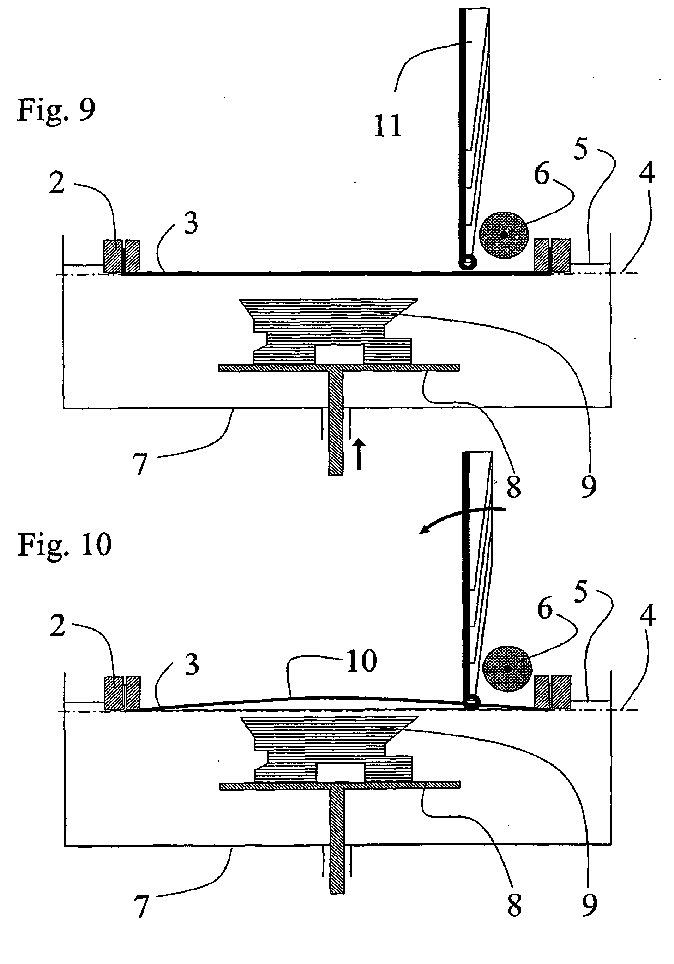

Eine alternative und besonders bevorzugte Ausführung gemäß einem weiteren Aspekt der vorliegenden Erfindung, bei dem nach dem Härten einer vorangehenden Schicht die Bau-/Referenzebene wieder glatt gestrichen wird, ist in den Fig. 9 bis 15 gezeigt. Diese Ausführungsform kann anstelle der in den Fig. 5 bis 7 gezeigten Ausführungsformen durchgeführt werden. Gleiche Bezugsziffern bezeichnen entsprechende Elemente und Einrichtungen. Die Projektionseinheit 1 ist in den Fig. 9 bis 15 nicht gezeigt.

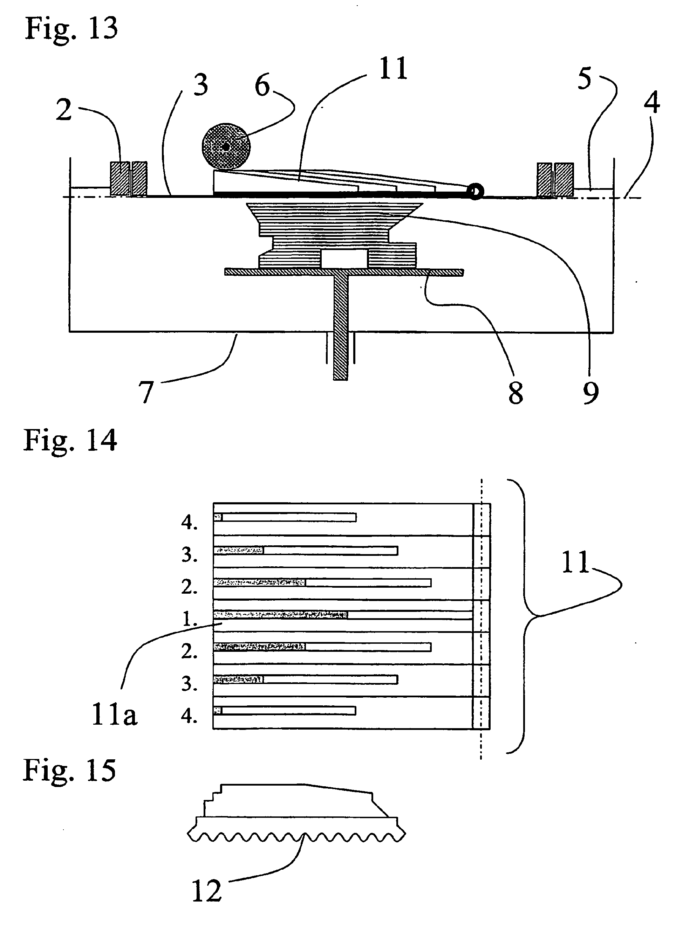

Fig. 9 zeigt den Ausgangszustand, nach Trennung der zuletzt belichteten Schicht des Objektes 9: Die Folie 3 befindet sich in einer beliebigen oder undefinierten Position. Die Andruckplatte bzw. der Abstreifer 11, die bzw. der mehrere Segmente aufweist (s. auch Fig. 14; Bezugszeichen 11a, 1.-4. von Mitte nach außen), befindet sich in Ruheposition, ist z.B. nach oben geklappt.

Auf jedem einzelnen Segment befindet sich, zur Seite der Rolle 6 hin, eine Rippe oder eine ansteigende Erhöhung (in Fig. 14 mit einem länglichen Rechteck auf der oberen Segmentfläche gezeigt, wobei mit der dunklen Farbe die maximale Höhe der Rippe bzw. der Erhöhung angedeutet ist), die je nach Segment in unterschiedlichem Abstand zur Schwenkachse (in Fig. 15 rechte Seite) ansetzt oder mit der Erhöhung beginnt.

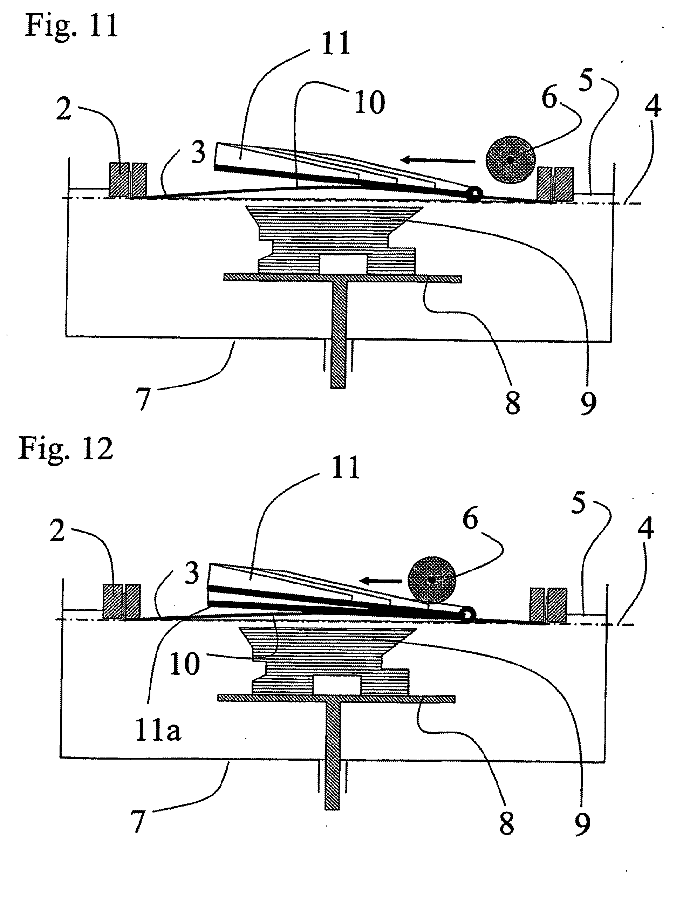

Wie in Fig. 10 gezeigt kann sich durch das Positionieren (nach oben Fahren) des Objektes zur Belichtung der nächsten Schicht durch eingeschlossene Volumina eine konvexe Wölbung 10 (positiver Miniskus) bilden, so dass eine planare Bau-/Referenzebene durch die Folie nicht mehr gewährleistet ist. Um diese Bau-/Referenzebene wieder herzustellen, werden wie in Fig. 11 gezeigt die Segmente 11,11a mit 1.-4. insgesamt nach unten geklappt und liegen auf der konvex gewölbten Folie 10 auf. Zum Andrücken der Segmente wird nun eine Andruckwalze 6 von der Schwenkachse her eingebracht. Bedingt durch die unterschiedliche, in Rollrichtung der Rolle (s. Pfeil) versetzte Ausbildung der Rippen bzw. der Erhöhung je Segment werden die Segmente zeitversetzt angedrückt (Fig. 12), wodurch die Folie zurück in die Bau-/Referenzebene gedrückt und das unter der Folie befindliche überschüssige Material allmählich verdrängt wird. Dieser Prozeß ist am effektivsten, wenn wie in Fig. 12 gezeigt, der Abstand von der Schwenkachse zur Rippe bzw. Erhöhung beim mittleren Segment 11a (1.) am geringsten und dieser Abstand bei den Segmenten nach außen (2.-4.) zunimmt, so daß der Andruck- und Materialverdrängungsprozeß durch den Andruck der Rolle 6 , beginnend mit dem mittleren Segment 11a, von innen nach außen erfolgt. Jedoch sind auch andere Formen der Anordnung der Rippen/der Erhöhungen möglich, so daß entsprechend andere Andruckabfolgen erfolgen.

Fig. 13 zeigt die Endposition der Rolle, in der sich alle Segmente der Platte und somit auch die Folie in der Bau-/Referenzebene befinden.

Fig. 14 zeigt eine mögliche Ausführungssform der Segmente mit ihren Rippen in der Draufsicht.

Um eine Adhäsion der Plattensegmente 11,11a, 1.-4. an der Folie 3 zu vermeiden und eine leichtere Trennung der Segmente 11,11a,1.-4. von der Folie 3 zu ermöglichen (d.h. also das Hochschwenken der Segmente in die Ruheposition), ohne die planarisierte Position der Folie zu verändern, ist die Unterseite der Plattensegmente vorzugsweise aufgerauht bzw. strukturiert, wie in Fig. 15 mit dem Bezugszeichen 12 gezeigt. In den Fig. 9-14 sind die Rippen oder Erhöhungen im Profil in Längsrichtung sich gleichmäßig erhöhend oder (wie in Fig. 14 in dunkler Farbe angegeben) auf gleichbleibender Höhe ausgebildet. Sie können jedoch auch unterbrochen oder in Wellenform oder in anderer geeigneter Form ausgebildet sein, um die Druckwirkung auf die Folie zu modifizieren.

Die obige Beschreibung der bevorzugten Ausführungsformen erfolgte lediglich beispielhaft zur Erläuterung; vielmehr sind beliebige Variationen und Kombinationen der beschriebenen Merkmale und Vorteile im Rahmen der in den Ansprüchen definierte Erfindung möglich.

## Patentansprüche

1. Verfahren zur Herstellung eines dreidimensionalen Objekts durch schichtweises Verfestigen eines photopolymerisierbaren Kunststoffs, mit Hilfe einer planaren oder im wesentlichen planaren Bau-/Referenzebene (4), an der der in einem flüssigen Material enthaltene photopolymerisierbare Kunststoff schichtweise durch elektromagnetische Strahlung gehärtet wird und sich der Materialauftrag für die folgende Schicht automatisch durch die Trennung der zuletzt ausgehärteten Schicht von der Bau-/Referenzebene (4) ergibt, wobei die Bau-/Referenzebene (4) ausgebildet wird durch eine elastische Folie (3),
wobei die Folie (3) in einen Rahmen (2) eingespannt ist **dadurch gekennzeichnet, daß** die Höhenpositionierung des Rahmens (2) mit der Folie (3) in einem Becken (7) mit dem flüssigen Material so eingestellt wird, dass der Druck des flüssigen Materials das Durchhängen der Folie kompensiert, ohne daß eine weitere Folienstütze notwendig ist, und sich die Folienunterseite während des kompletten Bauprozesses permanent im Kontakt mit dem Material befindet.

2. Verfahren nach Anspruch 1,
**dadurch gekennzeichnet, dass** eine auftretende konvexe Wölbung der Folie, hervorgerufen durch von unten drückendes Material, durch die horizontale Bewegung oder Einbringung eines Streifers oder Schiebers oder einer Rolle (6) oder Platte (11) in einer definierten Höhe über die Oberseite der Folie eliminiert und eine planare oder im wesentlichen planare Bau-/Referenz-Ebene (4) wieder hergestellt wird.

3. Verfahren nach einem der vorangehenden Ansprüche,
**dadurch gekennzeichnet, dass** der Rahmen (2) mit der Folie (3) das Becken (7) nach oben hin abriegelt und das flüssige Material immer die Unterseite der Folie (3) benetzt.

4. Verfahren zur Herstellung eines dreidimensionalen Objekts durch schichtweises Verfestigen eines photopolymerisierbaren Kunststoffs, mit Hilfe einer planaren oder im wesentlichen planaren Bau-/Referenzebene (4), an der der in einem flüssigen Material enthaltene photopolymerisierbare Kunststoff schichtweise durch elektromagnetische Strahlung härten soll und sich der Materialauftrag für die folgende Schicht automatisch durch die Trennung der zuletzt ausgehärteten Schicht von der Bau-/Referenzebene (4) ergibt, wobei die Bau-/Referenzebene (4) ausgebildet wird durch eine elastische Folie (3), wobei
die Folie (3) in einen Rahmen (2) eingespannt ist und **dadurch gekennzeichnet, dass** die Höhenpositionierung des Rahmens (2) mit der Folie (3) in einem Becken (7) mit dem flüssigen Material so eingestellt wird, dass sich die Folienunterseite während des kompletten Bauprozesses permanent im Kontakt mit dem Material befindet, und dass zum Planarisieren der Folie (3) zur Bereitstellung einer Bau-/Referenzebene (4) ein Streifer oder eine Platte (11) über die Oberseite der Folie eingebracht wird, wobei der Streifer oder die Platte (11) mehrere Segmente (11a,1.-4.) aufweist, die zur Bau-/Referenzebene (4) hin geschwenkt oder gekippt werden können, wobei die einzelnen Segmente (11a,1.-4.), vorzugsweise um eine gemeinsame Schwenk- oder Kippachse und zueinander in Richtung auf die Folie (3) planparallel, zur Referenzebene (4) schwenken, und wobei auf den einzelnen Segmenten Rippen oder Erhöhungen ausgebildet sind und durch das darüber Rollen oder Schieben eines Andruckelements wie z.B. einer Walze, vorzugsweise ausgehend von der Schwenk- oder Kippachse, die Segmente (11a,1.-4.) nacheinander, gegebenenfalls bei bestimmten Segmenten gleichzeitig, die Folie (3) in die Bau-/Referenzebene (4) drücken und somit den positiven Meniskus verdrängen und so eine planare Bau-/Referenzebene (4) hergestellt wird.

5. Verfahren nach Anspruch 4, **dadurch gekennzeichnet, daß** die Rippen oder Erhöhungen auf den einzelnen Segmenten (11a,1.-4.) so unterschiedlich ausgebildet sind, daß ein aufeinanderfolgendes Andrücken von innen nach außen erfolgt.

6. Verfahren nach Anspruch 4 oder 5, **dadurch gekennzeichnet, dass** der Streifer, der Schieber oder die Platte (11), gegebenenfalls die Segmente (11a,1.-4.) davon, eine strukturierte bzw. aufgerauhte Unterseite (12) aufweisen, um eine Adhäsion beim Andruck mit der Folie (3) zu vermeiden und eine leichte Trennung der Segmente von der Folienoberfläche wieder zu gewährleisten.

7. Verfahren nach einem der vorangehenden Ansprüche, **dadurch gekennzeichnet, dass** die Bereitstellung der Bau-/Referenzebene (4) allein durch die Folie (3) ohne transparente Glas- oder Kunststoffplatte erfolgt.

8. Vorrichtung zur Herstellung eines dreidimensionalen Objekts durch schichtweises Verfestigen eines photopolymerisierbaren Kunststoffs in einem Becken (7), mit Hilfe einer planaren oder im wesentlichen planaren Bau-/Referenzebene (4), an der der in einem flüssigen Material enthaltene photopolymerisierbare Kunststoff schichtweise durch elektromagnetische Strahlung härten soll, wobei die Bau-/Referenzebene (4) durch eine elastische Folie (3) ausgebildet ist,
wobei die Folie (3) in einen Rahmen (2) eingespannt ist **dadurch gekennzeichnet, daß** die Höhenpositionierung des Rahmens (2) mit der Folie (3) im Becken (7) mit dem flüssigen Material so einstellbar ist, dass der Druck des flüssigen Materials das Durchhängen der Folie ohne weitere Folienstütze kompensieren kann, und dass die Folienunterseite in der Lage ist, während des kompletten Bauprozesses permanent in Kontakt mit dem Material zu sein.

9. Vorrichtung nach Anspruch 8,
**dadurch gekennzeichnet, dass** sie ferner einen Streifer oder Schieber oder eine Rolle (6) oder eine Platte (11) aufweist, der bzw. die zeitweise, d.h. nicht permanent in einer definierten Höhe über der Oberseite desjenigen Folienabschnitts, der über der Bauzone des dreidimensionalen Objekts liegt, horizontal einbringbar oder horizontal bewegbar ist.

10. Vorrichtung zur Herstellung eines dreidimensionalen Objekts durch schichtweises Verfestigen eines photopolymerisierbaren Kunststoffs in einem Becken (7), mit Hilfe einer planaren oder im wesentlichen planaren Bau-/Referenzebene (4), an der der in einem flüssigen Material enthaltene photopolymerisierbare Kunststoff schichtweise durch elektromagnetische Strahlung härten soll, wobei die Bau-/Referenzebene (4) durch eine elastische Folie (3) ausgebildet ist, wobei
die Folie (3) in einen Rahmen (2) eingespannt ist und **dadurch gekennzeichnet, dass** die Höhenpositionierung des Rahmens (2) mit der Folie (3) im Becken (7) mit dem flüssigen Material so einstellbar ist, dass die Folienunterseite in der Lage ist, während des kompletten Bauprozesses permanent in Kontakt mit dem Material zu sein, und dass, zum Planarisieren der Folie (3) in der Bau-/Referenzebene (4), die Vorrichtung folgendes umfasst:
- ein Andruckelement wie eine Rolle (6) oder einen Schieber, die bzw. der in einer einstellbaren Höhe über die Oberseite desjenigen Folienabschnitts, der über der Bauzone des dreidimensionalen Objekts liegt, einbringbar und vorzugsweise horizontal bewegbar ist,
- eine Platte (11) oder einen Streifer, die bzw. der mehrere Segmente (11a,1.-4.) aufweist, die zur Bau-/Referenzebene (4) hin schwenk- oder kippbar sind, wobei auf den einzelnen Segmenten (11a,1.-4.) Rippen oder Erhöhungen ausgebildet sind und durch das darüber Rollen oder Schieben des Andruckelements die Segmente (11a,1.-4.) nacheinander, gegebenenfalls bestimmten Segmenten gleichzeitig, auf die Folie (3) gedrückt werden kann und so eine planare Bau-/Referenzebene (4) hergestellt werden kann.

11. Vorrichtung nach Ansprüche 10, **dadurch gekennzeichnet, daß** die Rippen oder Erhöhungen auf der von der Folie (3) abgewandten und dem Andruckelement zugewandten Seite ausgebildet sind, und/oder daß die Segmente (11a,1.-4.) der Platte oder des Streifers eine strukturierte bzw. aufgerauhte Unterseite (12) zur Folie (3) hin aufweisen.

12. Vorrichtung nach einem der Ansprüche 8 bis 11, **dadurch gekennzeichnet, dass** die Bau-/Referenzebene (4) allein durch die Folie (3), ohne transparente Glas- oder Kunststoffplatte und/oder ohne zusätzlich auf die Folie (3) aufgebrachtes, deformierbares Beschichtungsfluid, ausgestaltet ist.

13. Vorrichtung nach einem der Ansprüche 8 bis 12,
**dadurch gekennzeichnet, dass** der Rahmen (2) mit der Folie (3) das Becken (7) nach oben hin hermetisch abriegelt.

14. Vorrichtung nach einem der Ansprüche 8 bis 12,
**dadurch gekennzeichnet, dass** der Rahmen (2) mit der Folie (3) eine auswechselbare Einheit bildet.

15. Vorrichtung nach einem der Ansprüche 8 bis 14, **dadurch gekennzeichnet, daß** die Folie (3) derart im Rahmen (2) eingespannt ist, daß die Folie (3) im wesentlichen keiner oder nur einer geringen Vorspannung unterliegt.

## Claims

1. A process for the production of a three-dimensional object by layer-wise solidification of a photo-polymerizable resin by means of a planar or essentially planar construction/reference plane (4), at which the photo-polymerizable resin, which is contained in a liquid material, is hardened by electromagnetic irradiation, and wherein the material application for the subsequent layer automatically results from the separation of the last hardened layer from the construction/reference plane (4), wherein the construction/reference plane (4) is formed by an elastic film (3), wherein the film (3) is fixed in a frame (2), **characterized in that** the height position of the frame (2) with the film (3) in a basin (7) containing the liquid material is adjusted such that the pressure of the liquid material compensates the sagging of the film, without a further support being necessary, and that the lower side of the film during the whole construction process is permanently in contact with the material.

2. The process according to claim 1, **characterized in that** the occurring convex curving of the film, which is caused by material pressing from below, is eliminated by a horizontal movement, or by placement, of a puller or a slider or a roller (6) or a plate (11) in a prescribed height along the upper side of the film, and a planar or essentially planar construction/reference plane (4) is reestablished.

3. The process according to one of the preceding claims, **characterized in that** the frame (2) with the film (3) seals the basin (7) upwards, and that the liquid material always wets the lower side of the film (3).

4. A process for the production of a three-dimensional object by layer-wise solidification of a photo-polymerizable resin by means of a planar or essentially planar construction/reference plane (4), at which the photo-polymerizable resin, which is contained in a liquid material, is to be hardened layer-wise by electromagnetic irradiation, and wherein the material application for the subsequent layer automatically results from the separation of the last hardened layer from the construction/reference plane (4), wherein the construction/reference plane (4) is formed by an elastic film (3), wherein the film (3) is fixed in a frame (2), **characterized in that** the height position of the frame (2) with the film (3) in a basin (7) with the liquid material is adjusted such that the lower side of the film, during the whole construction process, is permanently in contact with the material,
and that, for planarizing the film (3) for providing a construction/reference plane (4), a puller or plate (11) is placed above the upper side of the film, wherein the puller or plate (11) comprises multiple segments (11a,1.-4.) that are pivotable towards the construction/reference plane (4), wherein the respective segments (11a,1.-4.), preferably around a common pivoting axis and mutually co-planar towards the film, are pivoted towards the construction/reference plane (4), and wherein ribs or protrusions are formed on the respective segments, and that by rolling or sliding a press element, such as e.g. a roller, the respective segments (11a,1.-4.), optionally certain portions concurrently, press successively the film (3) into the construction/reference plane (4), preferably starting from the pivoting axis, to thereby to eliminate the positive meniscus and thus to establish a planar construction/reference plane (4).

5. The process according to claim 4, **characterized in that** the ribs or protrusions on the respective segments (11a,1.-4.) are provided differently such that a successive pressing from the center to the outside is conducted.

6. The process according to claim 4 or 5, **characterized in that** the puller, the slider or the plate (11), optionally the segments (11a,1.-4.) thereof, comprise a structured or roughened lower surface (12), in order to avoid adhesion with the film (3) upon pressing and to ensure easy separation of the segments from the film surface.

7. The process according to one of the preceding claims, **characterized in that** the provision of the construction/reference plane (4) is accomplished solely by the film (3), without a transparent glass or plastic plate.

8. A device for the production of a three-dimensional object by layer-wise solidification of a photo-polymerizable resin in a basin (7) by means of a planar or essentially planar construction/reference plane (4), at which the photo-polymerizable resin, which is contained in a liquid material, is to be solidified layer-wise by electromagnetic irradiation, wherein the construction/reference plane (4) is formed by an elastic film (3), wherein the film (3) is fixed in a frame (2), **characterized in that** the height position of the frame (2) with the film (3) within the basin (7) with the liquid material is adjustable such that the pressure of the liquid material is capable of compensating sagging of the film without a further support, and that the lower side of the film is capable of being in contact with the material permanently during the whole construction process.

9. The device according to claim 8, **characterized in that** it further comprises a puller or a slider or a roller (6) or a plate (11), which temporarily, i.e. not permanently, is horizontally placeable or horizontally movable in a prescribed height above the upper side of the portion of the film which lies above the construction zone of the three-dimensional object.

10. A device for the production of a three-dimensional object by layer-wise solidification of a photo-polymerizable resin in a basin (7) by means of a planar or essentially planar construction/reference plane (4), at which the photo-polymerizable resin, which is contained in a liquid material, is to be hardened layer-wise by electromagnetic irradiation, wherein the construction/reference plane (4) is formed by an elastic film (3), wherein the film (3) is fixed in a frame (2), and **characterized in that** the height position of the frame (2) with the film (3) in the basin (7) containing the liquid material is adjustable such that the lower side of the film is capable of being in contact with the material permanently during the whole construction process, and that, for planarizing the film (3) in the construction/reference plane (4), the device comprises the following:
- a press element, such as a roller (6) or a slider, which is placeable and preferably horizontally movable in an adjustable height above the upper side of the film portion which lies above the construction zone of the three-dimensional object,
- a plate (11) or puller comprising multiple segments (11a,1.-4.) that are pivotable towards the construction/reference plane (4), wherein ribs or protrusions are formed on the respective segments (11a,1.-4.), and that by rolling or sliding said press element, the respective segments (11a,1.-4.) successively, optionally certain portions concurrently, can press against the film (3) to thereby establish a planar or essentially planar construction/reference plane (4).

11. The process according to claim 10, **characterized in that** the ribs or protrusions are formed on the side that is opposite to the film (3) and faces the press element, and/or that the segments (11a,1.-4.) of the plate or the slider comprise a structured or roughened lower surface (12) towards the film (3).

12. The device according to any one of claims 8 to 11, **characterized in that** the construction/reference plane (4) is formed solely by the film (3), without a transparent glass or plastic plate, and/or without additional deformable coating fluid being applied onto the film (3).

13. The device according to any one of claims 8 to 12, **characterized in that** the frame (2) with the film (3) hermetically seals the basin (7) upwards.

14. The device according to any one of claims 8 to 12, **characterized in that** the frame (2) with the film (3) forms a replaceable unit.

15. The device according to any one of claims 8 to 14, **characterized in that** the film (3) is fixed within the frame (2) in such a manner that the film (3) is subjected to essentially no, or only a low amount of pre-tension.

## Revendications

1. Procédé pour la réalisation d'un objet tridimensionnel par un durcissement couche par couche d'une matière plastique photopolymérisable, au moyen d'un plan d'élaboration ou de référence (4) planaire ou sensiblement planaire, sur lequel la matière plastique photopolymérisable, contenue dans un matériau liquide, est durcie couche par couche sous l'effet d'un rayonnement électromagnétique, et le dépôt du matériau pour la couche suivante est obtenu automatiquement sous l'effet de la séparation entre la couche durcie en dernier et le plan d'élaboration ou de référence (4), ledit plan d'élaboration ou de référence (4) étant formé par un film (3) élastique, ledit film (3) étant tendu dans un cadre (2),
**caractérisé en ce que** le positionnement en hauteur du cadre (2) avec le film (3) dans une cuve (7) contenant le matériau liquide est réglé de telle sorte que la pression du matériau liquide compense le fléchissement du film sans qu'un support de film supplémentaire soit nécessaire, et la face inférieure du film est en permanence en contact avec le matériau pendant tout le processus de réalisation.

2. Procédé selon la revendication 1, **caractérisé en ce qu'**une courbure convexe, se formant dans le film sous l'effet du matériau poussant par le bas, est éliminée par le mouvement horizontal ou la mise en place d'un racleur ou d'une palette ou d'un rouleau (6) ou d'une plaque (11) à une hauteur définie au-dessus de la face supérieure du film, et un plan d'élaboration ou de référence (4) planaire ou sensiblement planaire est à nouveau réalisé.

3. Procédé selon l'une des revendications précédentes, **caractérisé en ce que** le cadre (2) avec le film (3) obture la cuve (7) vers le haut et le matériau liquide mouille toujours la face inférieure du film (3).

4. Procédé pour la réalisation d'un objet tridimensionnel par un durcissement couche par couche d'une matière plastique photopolymérisable, au moyen d'un plan d'élaboration ou de référence (4) planaire ou sensiblement planaire, sur lequel la matière plastique photopolymérisable, contenue dans un matériau liquide, est destinée à durcir couche par couche sous l'effet d'un rayonnement électromagnétique, et le dépôt du matériau pour la couche suivante est obtenu automatiquement sous l'effet de la séparation entre la couche durcie en dernier et le plan d'élaboration ou de référence (4), ledit plan d'élaboration ou de référence (4) étant formé par un film (3) élastique, ledit film (3) étant tendu dans un cadre (2), et
**caractérisé en ce que** le positionnement en hauteur du cadre (2) avec le film (3) dans une cuve (7) contenant le matériau liquide est réglé de telle sorte que la face inférieure du film est en permanence en contact avec le matériau pendant tout le processus de réalisation, et **en ce que** pour obtenir un film (3) planaire en vue de mettre à disposition un plan d'élaboration ou de référence (4), un racleur ou une plaque (11) est mis en place au-dessus de la face supérieure du film, le racleur ou la plaque (11) comportant plusieurs segments (11a,1. - 4.) que l'on peut faire pivoter ou basculer vers le plan d'élaboration ou de référence (4), les différents segments (11a, 1. - 4.) pivotant par rapport au plan de référence (4) de préférence autour d'un axe de pivotement ou axe de basculement commun et de manière plane et parallèle entre eux vers le film (3), et des nervures ou bosses étant réalisées sur les différents segments et, sous l'effet du roulement ou du coulissement de l'élément de pression, tel qu'un cylindre, au-dessus de ceux-ci, de préférence à partir de l'axe de pivotement ou axe de basculement, les segments (11a, 1. - 4.) poussent les uns après les autres, le cas échéant simultanément dans le cas de certains segments, le film (3) dans le plan d'élaboration ou de référence (4) et repoussent donc le ménisque positif, et peuvent réaliser ainsi un plan d'élaboration ou de référence (4) planaire.

5. Procédé selon la revendication 4, **caractérisé en ce que** les nervures ou bosses sur les différents segments (11a, 1. - 4.) sont différentes les unes des autres, de telle sorte qu'il se produit une pression successive de l'intérieur vers l'extérieur.

6. Procédé selon la revendication 4 ou 5, **caractérisé en ce que** le racleur, la palette ou la plaque (11), le cas échéant les segments (11a, 1. - 4.) de ceux-ci, comportent une face inférieure (12) structurée ou rendue rugueuse, afin d'empêcher qu'ils adhèrent contre le film (3) au moment de la pression et de garantir à nouveau une séparation aisée entre les segments et la surface du film.

7. Procédé selon l'une quelconque des revendications précédentes, **caractérisé en ce que** le plan d'élaboration ou de référence (4) est mis à disposition uniquement par le film (3) sans plaque transparente en verre ou en matière plastique.

8. Dispositif pour la réalisation d'un objet tridimensionnel par un durcissement couche par couche d'une matière plastique photopolymérisable dans une cuve (7), au moyen d'un plan d'élaboration ou de référence (4) planaire ou sensiblement planaire, sur lequel la matière plastique photopolymérisable, contenue dans un matériau liquide, est destinée à durcir couche par couche sous l'effet d'un rayonnement électromagnétique, ledit plan d'élaboration ou de référence (4) étant formé par un film (3) élastique, ledit film (3) étant tendu dans un cadre (2),
**caractérisé en ce que** le positionnement en hauteur du cadre (2) avec le film (3) dans la cuve (7) contenant le matériau liquide peut être réglé de telle sorte que la pression du matériau liquide peut compenser le fléchissement du film sans support de film supplémentaire, et **en ce que** la face inférieure du film est apte à rester en permanence en contact avec le matériau pendant tout le processus de réalisation.

9. Dispositif selon la revendication 8, **caractérisé en ce qu'**il comporte, en outre, un racleur ou une palette ou un rouleau (6) ou une plaque (11), lequel ou lesquels peuvent être mis en place horizontalement ou peuvent être déplacés horizontalement de temps en temps, c'est-à-dire non pas en permanence, à une hauteur définie au-dessus de la face supérieure du tronçon de film qui est situé au-dessus de la zone d'élaboration de l'objet tridimensionnel.

10. Dispositif pour la réalisation d'un objet tridimensionnel par un durcissement couche par couche d'une matière plastique photopolymérisable dans une cuve (7), au moyen d'un plan d'élaboration ou de référence (4) planaire ou sensiblement planaire, sur lequel la matière plastique photopolymérisable, contenue dans un matériau liquide, est destinée à durcir couche par couche sous l'effet d'un rayonnement électromagnétique, ledit plan d'élaboration ou de référence (4) étant formé par un film (3) élastique, ledit film (3) étant tendu dans un cadre (2),
**caractérisé en ce que** le positionnement en hauteur du cadre (2) avec le film (3) dans la cuve (7) contenant le matériau liquide peut être réglé de telle sorte que la face inférieure du film est apte à rester en permanence en contact avec le matériau pendant tout le processus de réalisation,
et **en ce que** pour obtenir un film (3) planaire dans le plan d'élaboration ou de référence (4), le dispositif comporte les éléments suivants :
- un élément de pression, tel qu'un rouleau (6) ou une palette, lequel ou lesquels peuvent être mis en place horizontalement ou, de préférence, peuvent être déplacés horizontalement à une hauteur définie au-dessus de la face supérieure du tronçon de film qui est situé au-dessus de la zone d'élaboration de l'objet tridimensionnel,
- une plaque (11) ou un racleur, lequel ou lesquels comportent plusieurs segments (11a, 1. - 4.) que l'on peut faire pivoter ou basculer vers le plan d'élaboration ou de référence (4), des nervures ou bosses étant réalisées sur les différents segments (11a, 1. - 4.), et, sous l'effet du roulement ou du coulissement de l'élément de pression au-dessus de ceux-ci, les segments (11a, 1. - 4.) peuvent pousser les uns après les autres, le cas échéant simultanément dans le cas de certains segments, sur le film (3), et peuvent réaliser ainsi un plan d'élaboration ou de référence (4) planaire.

11. Dispositif selon la revendication 10, **caractérisé en ce que** les nervures ou bosses sont réalisées sur la face détournée du film (3) et orientée vers l'élément de pression, et/ou **en ce que** les segments (11a, 1. - 4.) de la plaque ou du racleur comportent une face inférieure (12) structurée ou rendue rugueuse, vers le film (3).

12. Dispositif selon l'une quelconque des revendications 8 à 11, **caractérisé en ce que** le plan d'élaboration ou de référence (4) est réalisé uniquement par le film (3) sans plaque transparente en verre ou en matière plastique et/ou sans déposer, en plus, sur le film (3) un fluide de revêtement déformable.

13. Dispositif selon l'une quelconque des revendications 8 à 12, **caractérisé en ce que** le cadre (2) avec le film (3) obture la cuve (7) hermétiquement vers le haut.

14. Dispositif selon l'une quelconque des revendications 8 à 12, **caractérisé en ce que** le cadre (2) avec le film (3) forme une unité remplaçable.

15. Dispositif selon l'une quelconque des revendications 8 à 14, **caractérisé en ce que** le film (3) est tendu dans le cadre (2), de telle sorte que le film (3) n'est soumis sensiblement à aucune précontrainte ou seulement à une faible précontrainte.
